# EUROPÄISCHE PATENTANMELDUNG

(11) **EP 1 770 386 A2**
(43) Veröffentlichungstag der Anmeldung: **04.04.2007**
(21) Anmeldenummer: 06121486.2
(22) Anmeldetag: 29.09.2006
(51) Int. Cl.: G01N 15/06, G01N 21/55, G01N 27/00, G01N 29/02

(54) **Verfahren zum Nachweisen von Teilchen mit mehreren Sensorflächen und Sensoranordnung zum Durchführen dieses Verfahrens**

(30) Priorität: 30.09.2005 DE 102005047902
(71) Anmelder: SIEMENS AKTIENGESELLSCHAFT, 80333 München (DE)
(72) Erfinder: Arndt, Frank, 13581 Berlin (DE); Grahmann, Jan, 10315 Berlin (DE); Holst, Jens-Christian, 10405 Berlin (DE); Jensen, Jens Dahl, 14050 Berlin (DE); Krüger, Ursus, 14089 Berlin (DE); Rönsch, Hendrik, 10711 Berlin (DE); Steckenborn, Arno, 13589 Berlin (DE)

(57) **Zusammenfassung**

Die Erfindung betrifft ein Verfahren zum Nachweisen von Teilchen insbesondere von Nanopartikeln (16), wobei hierzu eine Sensorfläche (15) zur Verfügung gestellt wird, an die die Teilchen angelagert werden können. Weiterhin betrifft die Erfindung eine Sensoranordnung mit einer Sensorfläche (15), die zur Ausführung des genannten Verfahrens geeignet ist. Erfindungsgemäß ist vorgesehen, dass mehrere Sensorflächen (15) angeordnet sind, an die Teilchen mit jeweils unterschiedlichen Eigenschaften anlagern können. Beispielsweise können hierdurch Nanopartikel (16) unterschiedlicher Größe klassiert werden, wodurch vorteilhaft eine Aussage über die Größenverteilung der Nanopartikel (16) in einem Nanopulver möglich wird.

## Beschreibung

Die Erfindung betrifft ein Verfahren zum Nachweisen von Teilchen, bei dem eine Sensorfläche zur Verfügung gestellt wird, auf der sich die nachzuweisenden Teilchen im Falle ihres Vorhandenseins anlagern, und bei dem die Eigenschaften der Sensorfläche hinsichtlich eines Parameters überwacht werden, der sich aufgrund der Anlagerung der Teilchen verändert.

Ein Verfahren der eingangs angegebenen Art ist beispielsweise in der EP 982 588 A1 beschrieben und wird zur Rauchdetektion verwendet. Bei dem nachzuweisenden Rauch handelt es sich um Nanopartikel, welche als Teilchen in der Luft nachgewiesen werden sollen. Hierzu ist in einem Gehäuse eine Sensorfläche vorgesehen, deren Oberfläche eine molekular geprägte Struktur aufweist. Diese kann beispielsweise durch ein Polymer gebildet werden, wobei derartige Polymere auch als so genannte MIP (molecular imprinted polymers) bezeichnet werden. Die so gebildete Oberfläche wird derart hergestellt, dass während der Bildung der Polymerschicht die nachzuweisenden Partikel, z. B. Rauchgaspartikel in der Polymermatrix, eingebettet werden und nach deren Aushärtung aus dieser Matrix herausgelöst werden. Die dadurch entstehenden Poren sind selektiv zur Aufnahme der bei der Herstellung eingebetteten Art der Rauchgaspartikel geeignet, so dass sich im Falle des Auftretens von Rauch erneut Rauchgaspartikel in die betreffende Schicht einlagern.

Die Sensorfläche ist in dem Brandschutzmelder gemäß der EP 982 588 A1 als schwingungsfähiges System ausgeführt, so dass eine Resonanzfrequenz dieses schwingungsfähigen Systems prinzipbedingt durch die Einlagerung der Rauchgaspartikel verändert wird. Als schwingungsfähiges System kann beispielsweise ein Oberflächenwellengenerator auf der Oberfläche des schwingungsfähigen Systems angebracht werden. Dieser besteht aus auf der Oberfläche aufgebrachten Elektroden, die auf der Oberfläche des schwingungsfähigen Systems sich ausbreitende Wellen erzeugen. Je nach Beladungszustand der Beschichtung breiten sich diese Wellen (auch surface acoustic waves, SAW genannt) mit unterschiedlicher Geschwindigkeit aus. Die Laufgeschwindigkeit kann durch eine gegenüber dem aussendenden Elektrodenpaar angeordneten Elektrodenpaar ermittelt werden. Der Oberflächenwellengenerator mit dem Detektor-Elektrodenpaar bildet damit eine Überwachungsvorrichtung für die Sensorfläche, mit der die Veränderung eines Parameters, nämlich der Eigenfrequenz des schwingungsfähigen Systems, aufgrund der Anlagerung von Teilchen auf der Oberfläche messbar ist.

Detektoren der eingangs genannten Art werden auch zur Detektion von Gasmolekülen verwendet. Diese bilden dabei die nachzuweisenden Teilchen. Als Beschichtung kommen hierbei beispielsweise Polymerschichten zum Einsatz, an die bestimmte Gasmoleküle angelagert werden können. Hierbei ist die Massenzunahme verhältnismäßig geringer als bei der Anlagerung von Nanopartikeln, kann durch geeignete schwingungsfähige Systeme dennoch nachgewiesen werden.

Die Aufgabe der Erfindung besteht darin, ein Verfahren zum Nachweis von Teilchen anzugeben, mit dem vergleichsweise vielfältige Aussagen über die nachzuweisenden Teilchen getroffen werden können.

Diese Aufgabe wird mit dem eingangs angegebenen Verfahren erfindungsgemäß dadurch gelöst, dass mehrere Sensorflächen zur Verfügung gestellt werden, die empfindlich für Teilchen mit unterschiedlichen Eigenschaften sind. Hierdurch wird vorteilhafterweise erreicht, dass die Sensorflächen spezifisch auf unterschiedliche Eigenschaften der Teilchen reagieren können, dahingehend, dass diese die Teilchen mit jeweils bestimmten Eigenschaften an sich binden und diese Eigenschaften durch eine Überwachung der Sensorflächen dadurch registriert werden können. Die Eigenschaften können beispielsweise mit der Zusammensetzung der Teilchen oder ihrer Oberflächenstruktur zusammenhängen, wobei die Sensorflächen auf die nachzuweisenden Eigenschaften reagieren. Die Verwendung von mehreren Sensorflächen hat den Vorteil, dass durch einen einzigen Untersuchungsschritt ein Medium mit den nachzuweisenden Teilchen (beispielsweise Nanopartikel wie Rauch oder Moleküle, wie z. B. ein giftiges Gas) auf mehrere Eigenschaften hin untersucht werden kann. Hierbei wird bei der Analyse Zeit gespart, was die Wirtschaftlichkeit des Nachweisverfahrens erhöht bzw. ein schnelles Reagieren auf den Nachweis bestimmter Eigenschaften der Teilchen ermöglicht.

Gemäß einer Ausgestaltung der Erfindung ist vorgesehen, dass die Überwachung der Sensorflächen parallel erfolgt. Hierdurch lässt sich erreichen, dass eine Anlagerung von Teilchen auf den Sensorflächen sofort bei Eintreten dieses Ereignisses ermittelt werden kann. Auf der Grundlage der zeitlichen Änderung der Schwingungseigenschaften kann über dies auf die Konzentration der Teilchen in dem Medium geschlossen werden. Als Medium für die Teilchen kommt insbesondere ein Gas oder eine Flüssigkeit infrage, wobei das Medium auch durch die Teilchen selbst gebildet sein kann.

Eine andere Ausgestaltung des Verfahrens sieht vor, dass die Eigenschaften der nachzuweisenden Teilchen hinsichtlich ihrer chemischen Natur oder hinsichtlich ihrer Zusammensetzung unterschiedlich sind. Hierauf muss bei der Durchführung des Verfahrens dahingehend reagiert werden, dass eine Empfindlichkeit der Sensorflächen für die unterschiedlichen chemischen Eigenschaften bzw. hinsichtlich ihrer Zusammensetzung gegeben ist, so dass die Durchführung des Verfahrens auch das gewünschte Ergebnis erbringt. Hierdurch können beispielsweise bestimmte Stoffklassen nachgewiesen werden, die bestimmte funktionelle Gruppen aufweisen (z. B. bestimmte Oligonukleotide oder auch anorganische Gruppen in den Molekülen, die einer Stoffklasse bestimmte Eigenschaften verleihen, wie Alkohole, Säuren usw.).

Gemäß einer wieder anderen Ausgestaltung der Erfindung sind die nachzuweisenden Teilchen Nanopartikel, die sich hinsichtlich ihrer Größe voneinander unterscheiden. Hier ist es wünschenswert, die Größenverteilung der Nanopartikel zu kennen, was dadurch erreicht wird, dass die Spezifität der Sensorflächen bezüglich bestimmter Größenklassen der Nanopartikel erfolgt. Durch Änderung des Schwingungsverhaltens lässt sich über die Belegung dann gleichzeitig die Konzentration der entsprechenden Größenklasse der Nanopartikel im Gesamtvolumen der untersuchten Menge von Nanopartikeln ermitteln. Auf diese Weise können nanopartikuläre Rohstoffe vorteilhaft klassiert werden.

Es ist vorteilhaft, wenn die Sensorflächen zur Klassierung der Nanopartikel durch molekular geprägte Oberflächen gebildet werden. Hierbei können die bereits erwähnten MIP zur Anwendung kommen. Dabei erfolgt die Herstellung der MIP unter Anwendung der zu untersuchenden Nanopartikel, die homogen die nachzuweisende Größenklasse aufweisen. Als Größenklasse wird dabei ein Größenbereich der Nanopartikel verstanden, wobei die Größe beispielsweise auf den mittleren Durchmesser dieser Nanopartikel bezogen ist.

Weiterhin betrifft die Erfindung eine Sensoranordnung mit einer Sensorfläche, auf der sich nachzuweisende Teilchen im Falle ihres Vorhandenseins anlagern, und einer Überwachungsvorrichtung für die Sensorfläche, mit der die Veränderung eines Parameters der Sensorfläche aufgrund der Anlagerung der Teilchen ermittelbar ist.

Ein Beispiel der genannten Sensoranordnung ist in der bereits erwähnten EP 982 588 A1 beschrieben. Ausgehend hiervon ergibt sich weiterhin die Aufgabe, eine Sensoranordnung mit einer Sensorfläche für die nachzuweisenden Teilchen anzugeben, welche einen universellen und wirtschaftlichen Einsatz erlaubt.

Diese Aufgabe wird durch die genannte Sensoranordnung erfindungsgemäß dadurch gelöst, dass mehrere Sensorflächen vorhanden sind, die empfindlich für Teilchen mit unterschiedlichen Eigenschaften sind. Hierdurch lassen sich die bereits zum erfindungsgemäßen Verfahren erläuterten Vorteile erzielen, nämlich dass eine parallele Untersuchung von Teilchen mit unterschiedlichen Eigenschaften möglich ist, wobei gleichzeitig mehrere dieser Eigenschaften ermittelt werden können. Auf diese Weise lassen sich insbesondere Teilchengemische in kurzer Zeit untersuchen, wodurch die Wirtschaftlichkeit der erfindungsgemäßen Sensoranordnung begründet ist.

Gemäß einer Ausgestaltung der Sensoranordnung ist vorgesehen, dass die Sensorflächen nebeneinander in einem Array angeordnet sind. Hierdurch wird vorteilhaft die Fertigung der Sensoranordnung vereinfacht. Weiterhin ist durch die Anordnung der Sensorflächen nebeneinander die Beaufschlagung des so gebildeten Sensors mit dem zu untersuchenden Medium besonders einfach und gleichmäßig möglich.

Eine weitere Ausgestaltung der Erfindung sieht vor, dass die Sensorflächen für Nanopartikel unterschiedlicher Größenbereiche empfindlich sind. Hierdurch lassen sich die bereits erwähnten Vorteile erreichen, dass mit den Sensorflächen die Nanopartikel nach einer Verteilung ihrer Größe klassiert werden können.

Weiterhin ist es vorteilhaft, wenn sich die durch die Empfindlichkeit der Sensorflächen vorgegebenen Größenbereiche überschneiden. Hierdurch wird eine differenziertere Analyse des die Nanopartikel enthaltenen Mediums möglich. Es kann nämlich zur Auswertung der Größenbereiche eine höhere Auflösung erreicht werden, wenn beispielsweise eine Größenklasse von Nanopartikeln auf Sensorflächen mit benachbarten Größenbereichen abgeschieden werden. Bei genügender Kenntnis der möglichen Größenklassen in dem zu untersuchenden Medium können Rückschlüsse auf die Konzentration der Nanopartikel gezogen werden, welche sich in dem Überschneidungsbereich der Größenklassen befinden. Ohne sich überschneidende Größenbereiche wäre hierzu eine zusätzliche Sensorfläche notwendig, die genau diesen Größenbereich der Überschneidung zweier benachbarter Größenbereiche abdeckt.

Gemäß einer besonderen Ausgestaltung der Sensoranordnung ist vorgesehen, dass die Sensorflächen in mikromechanischer Bauweise in der Oberfläche eines Substrates ausgeführt sind, wobei die Sensorflächen durch Aussparungen in dieser Oberfläche voneinander getrennt sind. Hierdurch lässt sich eine Miniaturisierung des Nachweissystems erreichen, was neben den Vorteilen einer geringeren Baugröße insbesondere auch den Vorteil einer höheren Nachweisempfindlichkeit der Sensorflächen ergibt. Mikromechanisch hergestellte Sensorflächen weisen nämlich aufgrund ihrer geringen Eigenmasse eine weitaus höhere Empfindlichkeit gegenüber kleinsten Mengen von angelagerten, nachzuweisenden Teilchen auf. Die Herstellung der Sensorflächen durch Aussparungen in der Oberfläche ermöglicht weiterhin vorteilhaft die Anwendung von in der Mikromechanik gängigen Herstellungsmethoden, wie beispielsweise dem Ätzen.

Die Überwachungsvorrichtung kann vorteilhaft beispielsweise aus einem auf die Sensorfläche gerichteten elektromagnetischen Sender und einem Empfänger für von der Sensorfläche reflektierte Strahlung des elektromagnetischen Senders bestehen. Das Ausleseprinzip macht sich dabei den Umstand zunutze, dass die mit den Teilchen belegte Oberfläche der Sensorfläche andere optische Eigenschaften aufweist, als eine unbelegte. Die Auslesung erfolgt ähnlich dem Prinzip eines CD-Rom-Laufwerks, bei dem die Daten durch eine Veränderung der optischen Eigenschaften des Datenträgers erzeugt werden. Hierdurch ist ein Auslesungsverfahren zur Verfügung gestellt, welches vorteilhaft auf eine bewährte Technik zurückgreifen kann.

Eine andere vorteilhafte Möglichkeit der Schaffung einer Überwachungsvorrichtung sieht vor, dass diese eine schwingungsfähige Lagerung der Sensorflächen, einen Aktor für eine Schwingungsanregung der Sensorflächen und eine Messeinrichtung für die Schwingungsfrequenz und/oder Amplitude der Schwingungen enthält. Die schwingungsfähige Lagerung der Sensorfläche besteht genau genommen natürlich nicht nur aus der Fläche selbst, sondern auch aus dem Tragkörper, der die Fläche bildet. Dies kann in mikromechanischer Bauweise beispielsweise ein unterätzter Bereich des Siliziumsubstrates sein, der zusätzlich mit der die Sensorfläche zur Verfügung stellenden Schicht versehen ist. Eine Anlagerung von nachzuweisenden Teilchen auf der Sensorfläche bewirkt dann eine Veränderung des Schwingungsverhaltens eines so erzeugten Schwingers. Bei einer Anregung des Schwingers kann diese Veränderung ermittelt werden. Diese besteht aus einer Abweichung von der konstruktiv bedingten Schwingungsfrequenz des gebildeten Schwingers, welche direkt gemessen werden kann. Bei einer Anregung des Schwingers mit bekanntem Energieeintrag in den Schwinger kann jedoch auch die Messung der Amplitude einen Rückschluss über die Veränderung der Schwingungsfrequenz des Schwingers ermöglichen, da die Amplitude des Schwingers von der Abweichung der Schwingungsanregung von der Resonanzfrequenz abhängig ist.

Weitere Einzelheiten der Erfindung werden im Folgenden anhand der Zeichnung beschrieben. Gleiche oder sich entsprechende Zeichnungselemente sind in den Figuren jeweils mit denselben Bezugzeichen versehen und werden nur insoweit mehrfach erläutert, wie sich Unterschiede zwischen den einzelnen Figuren ergeben. Es zeigen
- Figur 1: einen schematischen Querschnitt durch ein Array von Sensorflächen eines Ausführungsbeispiels der erfindungsgemäßen Sensoranordnung,
- Figur 2: die schematische Aufsicht auf ein Array von Sensorflächen gemäß einem anderen Ausführungsbeispiel der erfindungsgemäßen Sensoranordnung und
- Figur 3: eine Sensorfläche eines Sensorarrays gemäß einem weiteren Ausführungsbeispiel der erfindungsgemäßen Sensoranordnung im Schnitt.

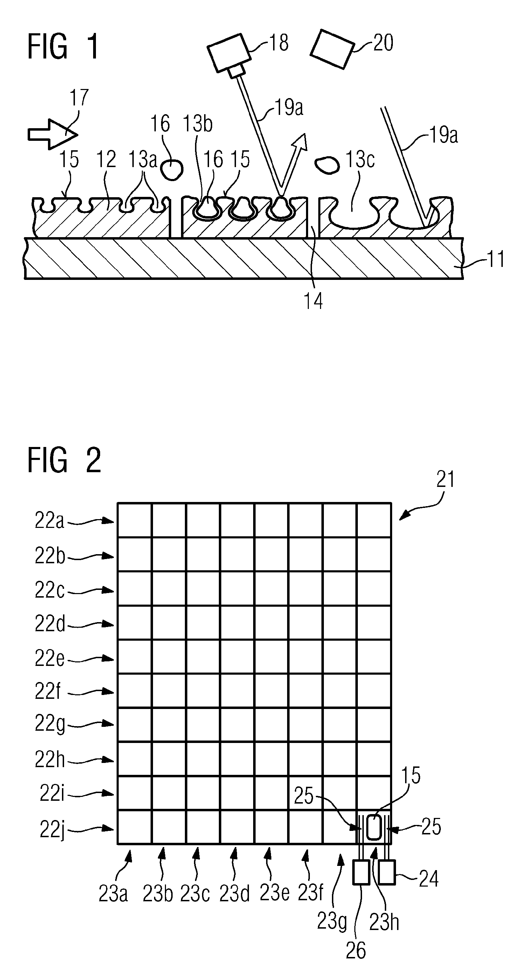

Eine Sensoranordnung gemäß Figur 1 weist ein Substrat 11 auf, auf dem eine Beschichtung 12 mit Poren 13a, 13b, 13c aufgebracht ist. Die Beschichtung ist durch Nuten in eine Reihe von Sensorflächen 15 aufgeteilt. Die Poren 13a, 13b, 13c weisen pro Sensorfläche jeweils eine andere Größenklasse auf.

Die Sensoranordnung kann beispielsweise in eine Kammer (nicht dargestellt) eingesetzt werden, welche die Zuleitung von Nanopartikeln 16 erlaubt. Diese wandern entsprechend des angedeuteten Pfeils 17 an den Sensorflächen entlang und werden aufgrund eines günstigen Verhältnisses von Adhäsionskräften selektiv auf der Sensorfläche mit den Poren 13b abgeschieden, da diese eine für die untersuchten Nanopartikel des Ausführungsbeispiels geeignete Größe aufweisen. Die anderen Sensorflächen mit den Poren 13a und 13c bleiben hingegen unbelegt.

Eine anschließende Auswertung mittels eines von einem Sender 18 ausgehenden Laserstrahls 19a ergibt ein signifikant verändertes Reflexionsverhalten der Sensorfläche 15 mit den durch Nanopartikel 16 belegten Poren 13b. Dieses Reflexionsverhalten kann über einen für den Laserstrahl 19a geeigneten Empfänger, beispielsweise eine Fotodiode, registriert werden, so dass ein Rückschluss über die untersuchte Teilchengröße möglich ist.

In Figur 1 ist weiterhin angedeutet, dass unbelegte Sensorflächen ein anderes Reflexionsverhalten aufweisen. Ein Laserstrahl 19b, der von demselben Sender 18 ausgesendet werden kann, wird in der angedeuteten Weise durch die Sensorfläche mit den Poren 13c nicht oder kaum reflektiert, da in einer der Poren 13c absorbiert wird.

Selbstverständlich können mit der Sensorvorrichtung gemäß Figur 1 auch Gemische aus Nanopartikeln unterschiedlicher Größenklassen untersucht werden, wobei in diesem Falle mehrere der Sensorflächen belegt würden. Anhand des Grades der Belegung der Sensorflächen kann weiterhin auf das Konzentrationsverhältnis der Nanopartikel unterschiedlicher Größenklassen geschlossen werden.

In Figur 2 ist schematisch dargestellt, wie die Sensorflächen 15 in einem Array 21 angeordnet werden. Das Array gemäß Figur 2 ist zweidimensional, ebenso könnte dieses jedoch auch eindimensional, also als einzelne Reihe ausgebildet sein. Das Array 21 gemäß Figur 2 weist Zeilen 22a bis 22j auf, in denen die Sensorflächen jeweils für Nanopartikel unterschiedlicher Größenklassen spezifisch sind. Die Größenklassen können beispielsweise das gesamte für Nanopartikel relevante Größenspektrum von unter einem Nanometer bis 1000 Nanometer abdecken. Die Stufung kann beispielsweise in den zehn Zeilen 22a bis 22j in gleichmäßigen Schritten von je 100 Nanometern erfolgen. Eine andere Möglichkeit ist eine Zuordnung zu Größenklassen, die relativ gesehen immer einen gleichen Bereich abdecken, also Zeile 22a von 0,5 bis 1 Nanometer, Zeile 22b von 1 bis 2 Nanometer, Zeile 22c von 2 bis 4 Nanometer usw. Weiterhin ist es möglich, dass sich die jeweiligen Größenklassen überschneiden, beispielsweise Zeile 22a von 1 bis 5 Nanometer, Zeile 22b von 3 bis 9 Nanometer, Zeile 22c von 7 bis 15 Nanometer usw.

Die Spalten 23a bis 23h des Arrays 21 stehen zur Verfügung, um eine Spezifik hinsichtlich von der Größe der Nanopartikel unabhängiger Eigenschaften zu erzeugen. Dies können beispielsweise chemische Eigenschaften sein, wobei die Spezifik auf Nanopartikel mit bestimmten chemischen Eigenschaften beispielsweise durch Einsatz von MIP erreicht werden kann. Die molekular geprägten Poren sind dann zeilenabhängig in bestimmte Größenklassen aufgeteilt, wobei aufgrund der in den Poren vorliegenden chemischen Strukturen nur Nanopartikel angelagert werden können, deren chemische Struktur zu den Poren "passt".

Weiterhin können einzelne Spalten, z. B. Spalte 23h auch für Gasmoleküle vorgesehen werden, die beispielsweise als reaktive Komponente einem Gemisch von Nanopartikeln zugemischt sein können. Durch die Belegung einer Sensorfläche mit derartigen Gasmolekülen kann auf eine Konzentration des Gases in dem Nanopartikelgemisch geschlossen werden. Eine Unterscheidung nach Teilchengröße ist bei Molekülen allerdings nicht sinnvoll.

In dem Sensorfeld in Zeile 22j und Spalte 23h ist exemplarisch eines der Sensorfelder 15 dargestellt, wobei weiterhin eine Nachweisvorrichtung, bestehend aus einem Generator 26 und einem Detektor 24 für Oberflächenwellen besteht. Der Generator 26 und der Detektor 24 weisen geeignete Elektroden 25 auf, die beidseits des Sensorfeldes 15 auf die Oberfläche des Arrays aufgebracht sind, um die Oberflächenwellen zu erzeugen bzw. zu registrieren.

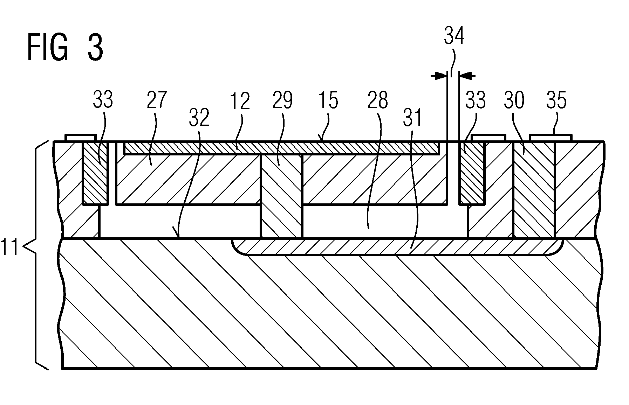

Gemäß Figur 3 ist der Ausschnitt aus einem Array dargestellt, bei dem die Sensorfläche 15 aus einem Plattenresonator 27 besteht. Der Plattenresonator 27 trägt die Beschichtung 12, auf der beispielsweise nachzuweisende Gasmoleküle angelagert werden (nicht dargestellt). Der Plattenresonator 27 ist in einer Vertiefung 28 untergebracht, die in Ätztechnologie in dem aus einem Schichtverband bestehenden Substrat 11 ausgebildet ist. In die Vertiefung 28 ist der Plattenresonator 27 auf einer säulenartigen Aufhängung 29 gelagert, so dass die sich zum Rand des Plattenresonators 27 erstreckenden Areale frei schwingen können.

Die säulenartige Aufhängung 15 bildet gleichzeitig eine Elektrode, welche über eine Durchkontaktierung 30 in der oberen Schicht des Substrates 11 und einer Leitstrecke 31 in der unteren Schicht des Substrates 11, die gleichzeitig den Boden 32 der Vertiefung bildet, elektrisch kontaktierbar ist. Weitere Elektroden 33 sind in den Rand der Vertiefung 28 integriert und den Seitenkanten des Plattenresonators 27 unter Bildung eines Spaltes 34 benachbart. Um den Plattenresonator 27 zu Schwingungen anzuregen, können die Elektroden 33 sowie die säulenartige Aufhängung 29 über Leiterbahnen 35, die auf der Oberseite des Substrates 11 verlaufen, mit einer Wechselspannungsquelle verbunden werden.

Sobald sich an der Oberfläche 15 der Schicht 12 Gasmoleküle anlagern, verändert sich aufgrund einer Veränderung der schwingenden Masse des Plattenresonators 27 dessen Resonanzfrequenz. Die Verschiebung der Resonanzfrequenz kann beispielsweise dadurch gemessen werden, dass durch Modifikation der Anregung die neue Resonanzfrequenz aufgefunden wird. Eine andere Möglichkeit ist die Ermittlung der aufgrund der Verschiebung der Resonanzfrequenz resultierenden Vergrößerung der Dämpfung. Aus der Dämpfung bzw. aus der Verschiebung der Resonanzfrequenz kann weiterhin auf die Erhöhung der schwingenden Masse des Plattenresonators 27 und damit auf die Masse der angelagerten Teilchen geschlossen werden. Damit bilden die Leiterbahnen 35 auch die Schnittstelle zur Ermittlung der Detektionsergebnisse. Die hierzu notwendige Messeinrichtung ist nicht dargestellt.

## Patentansprüche

1. Verfahren zum Nachweisen von Teilchen (16), bei dem eine Sensorfläche (15) zur Verfügung gestellt wird, auf der sich die nachzuweisenden Teilchen (16) im Falle ihres Vorhandenseins anlagern, und bei dem die Eigenschaften der Sensorfläche (15) hinsichtlich eines Parameters überwacht werden, der sich auf Grund der Anlagerung der Teilchen (16) verändert
**dadurch gekennzeichnet,**
**dass** mehrere Sensorflächen (15) zur Verfügung gestellt werden, die empfindlich für Teilchen (16) mit unterschiedlichen Eigenschaften sind.

2. Verfahren nach Anspruch 1,
**dadurch gekennzeichnet,**
**dass** die Überwachung der Sensorflächen (15) parallel erfolgt.

3. Verfahren nach einem der voranstehenden Ansprüche,
**dadurch gekennzeichnet,**
**dass** die Eigenschaften der nachzuweisenden Teilchen (16) hinsichtlich ihrer chemischen Natur oder hinsichtlich ihrer Zusammensetzung unterschiedlich sind.

4. Verfahren nach einem der voranstehenden Ansprüche,
**dadurch gekennzeichnet,**
**dass** die nachzuweisenden Teilchen (16) Nanopartikel sind, die sich hinsichtlich ihrer Größe voneinander unterscheiden.

5. Verfahren nach Anspruch 4,
**dadurch gekennzeichnet,**
**dass** die Sensorflächen (15) durch molekular geprägte Oberfläche gebildet werden.

6. Sensoranordnung mit einer Sensorfläche (15), auf der sich nachzuweisende Teilchen (16) im Falle ihres Vorhandenseins anlagern, und einer Überwachungsvorrichtung (24,25,26) für die Sensorfläche (15), mit der die Veränderung eines Parameters der Sensorfläche (15) auf Grund der Anlagerung der Teilchen (16) ermittelbar ist
**dadurch gekennzeichnet,**
**dass** mehrere Sensorflächen (15) vorhanden sind, die empfindlich für Teilchen (16) mit unterschiedlichen Eigenschaften sind.

7. Sensoranordnung nach Anspruch 6,
**dadurch gekennzeichnet,**
**dass** die Sensorflächen (15) nebeneinander in einem Array (21) angeordnet sind.

8. Sensoranordnung nach Anspruch 6 oder 7,
**dadurch gekennzeichnet,**
**dass** Sensorflächen (15) für Nanopartikel unterschiedlicher Größenbereiche empfindlich sind.

9. Sensoranordnung nach Anspruch 8,
**dadurch gekennzeichnet,**
**dass** sich die durch die Empfindlichkeit der Sensorflächen (15) vorgegebenen Größenbereiche überschneiden.

10. Sensoranordnung nach einem der Ansprüche 7 bis 9,
**dadurch gekennzeichnet,**
**dass** die Sensorflächen (15) in mikromechanischer Bauweise in der Oberfläche eines Substrates (11) ausgeführt sind, wobei die Sensorflächen durch Aussparungen (14,34) in dieser Oberfläche voneinander getrennt sind.

11. Sensoranordnung nach einem der Ansprüche 7 bis 10,
**dadurch gekennzeichnet,**
**dass** die Überwachungsvorrichtung aus einem auf die Sensorflächen gerichteten elektromagnetischen Sender (18) und einem Empfänger (20) für von den Sensorflächen (15) reflektierte Strahlung (19a,19b) des elektromagnetischen Senders besteht.

12. Sensoranordnung nach einem der Ansprüche 7 bis 11,
**dadurch gekennzeichnet,**
**dass** die Überwachungsvorrichtung eine schwingungsfähige Lagerung (29) der Sensorflächen (15), einen Aktor (33) für eine Schwingungsanregung der Sensorflächen und eine Messeinrichtung für die Schwingungsfrequenz und/oder Amplitude der Schwingungen enthält.
